# EUROPÄISCHE PATENTSCHRIFT

(11) **EP 0 433 707 B1**
(45) Veröffentlichungstag und Bekanntmachung des Hinweises auf die Patenterteilung: **10.05.1995**
(21) Anmeldenummer: 90122560.7
(22) Anmeldetag: 26.11.1990
(51) Int. Cl.: H04L 25/49

(54) **Empfänger für ein digitales Zusatzsignal in einem digitalen Übertragungssystem**
Receiver for a digital auxiliary signal in a digital communication system
Récepteur pour un signal auxiliaire dans un système de communication numérique

(30) Priorität: 18.12.1989 DE 3941747
(43) Veröffentlichungstag der Anmeldung: 26.06.1991
(73) Patentinhaber: SIEMENS AKTIENGESELLSCHAFT, 80333 München (DE)
(72) Erfinder: Thanhäuser, Gerhard, Dipl.-Ing. (TU), W-8905 Mering (DE)

(56) Entgegenhaltungen:
- EP-A- 0 251 007
- DE-A- 3 833 618
- TELCOM REPORT Bd. 12, Nr. 6, November 1989, MUNCHEN DE Seiten 192 - 195 DOEMER UND THANHAEUSER 'Mehr Platz auf dem Lichtwellenleiter'

## Beschreibung

Die Erfindung betrifft einen Empfänger für ein digitales Zusatzsignal mit vergleichsweise niedriger Bitfolgefrequenz, das zusammen mit einem digitalen Nutzsignal in einem Kanal eines digitalen Übertragungssystems übertragen wird.

Ein solcher Empfänger ist z.B. aus der EP-A-0 176 015 bekannt.

In analogen und digitalen Übertragungssystemen sind häufig Zusatzsignale vorgesehen, durch die ein Betriebsfernsprech- oder ein Telemetriekanal parallel zu den Nutzsignalen übertragen werden kann.

So ist aus der DE-Al-33 30 683 ein Übertragungssystem für digitale Signale hoher Schrittgeschwindigkeit bekannt, bei dem zusätzlich ein Signal vergleichsweise niedriger Schrittgeschwindigkeit mitübertragen wird. Dieses bekannte Übertragungssystem enthält in den Leitungsendgeräten Codeumsetzer, die das zu übertragende digitale Nutzsignal in einen Streckencode sendeseitig umsetzen und empfangsseitig rückumsetzen. Dazu wird im sendeseitigen Codeumsetzer das benötigte Taktsignal mittels einer Phasenregelschleife erzeugt, zur Übertragung des Zusatzsignals kann die Regelspannung der Phasenregelschleife amplitudenmoduliert und damit das Taktsignal und das Übertragungssignal phasenmoduliert werden. Empfangsseitig wirkt der in der Phasenregelschleife für die Takterzeugung enthaltene Phasendiskrimenator auch als Demodulator für die Zusatzsignale.

Wegen der beschränkten Übertragungskapazität aufgrund eines beschränkten zulässigen Phasenhubs wurde ein in der deutschen Patentanmeldung P 39 39 640.1 (= EP-A-0429889, veröffentlicht am 05.06.91) beschriebenes Verfahren entwickelt, bei dem das digitale Nutzsignal im CMI-Code übertragen wird und bei dessen Erzeugung wenigstens einer, der nach der CMI-Coderegel verbotenen Elementkombinationen ein binärer Signalinhalt zugeordnet wird. Um die Übertragung des Nutzsignals möglichst wenig zu stören, wird dabei nur der Beginn eines Einsbits oder eines Nullbits des Zusatzsignals markiert. Es ergeben sich dabei gegenüber der Bitdauer vergleichsweise sehr kurze Datenimpulse auf der Empfangsseite, aus denen nur sehr schwierig ein Taktsignal erzeugt werden kann.

In der parallelen dentschen Anmeldung P 39 41 746 (= EP-A- 0433706, veröffentlicht am 26.06.91) wird ein verbessertes Verfahren zur Übertragung eines digitalen Zusatzsignals beschrieben, bei dem das digitale Zusatzsignal und ein zugehöriges Taktsignal zu einem Kombinationssignal zusammengefaßt werden, dessen Bitrate dem des digitalen Zusatzsignals entspricht. Dabei wird zu Beginn eines jeden Bits des Kombinationssignals ein gegenüber der Bitperiode vergleichsweise kurzer Taktimpuls und in festem zeitlichen Abstand zu diesem jeweils dann ein Datenpuls erzeugt, wenn im digitalen Zusatzsignal ein Bit mit einem bestimmten logischen Pegel beginnt. Es kann dabei gewählt werden, ob auf diese Art und Weise der Beginn eines Einsbits oder der Beginn eines Nullbits im Kombinationssignal markiert werden soll. Während der Taktimpuls unmittelbar zu Beginn eines jeden Bits des Zusatzsignals mit einer gegenüber dem Abstand benachbarter Takt- und Datenimpulse kurzen Dauer übertragen wird, folgt ein etwa gleich langer Datenimpuls im zeitlichen Abstand von etwa 1/4 Bitperiode nach dem Taktimpuls. Die Takt- und die Datenimpulse werden mittels Coderegelverletzungen des digitalen Nutzsignals übertragen. Die vergleichsweise kurze Dauer der Takt- und der Datenimpulse ergibt sich dabei aus der Notwendigkeit, daß sich auch bei verjitterten Impulsen keine Überlappung von Takt- und Datenimpulse ergeben darf. Auf der Empfangsseite sind dabei wieder vollbitbreite digitale Signale entsprechend dem ursprünglichen Zusatzsignal und ein zugehöriges Taktsignal zu erzeugen.

Die Aufgabe bei der vorliegenden Erfindung besteht darin, einen Empfänger der eingangs erwähnten Art zu entwickeln, der aus den von einem empfangsseitigen Coderegelverletzungsprüfer abgegebenen Fehlersignalen, die dem Kombinationssignal aus Takt- und Datensignal entsprechen, empfangsseitig ein digitales Zusatzsignal mit zugehörigem Taktsignal wieder erzeugen kann.

Erfindungsgemäß wird die Aufgabe bei einem Empfänger der eingangs genannten Art durch die im Patentanspruch 1 angegebenen Maßnahmen gelöst. Vom besonderen Vorteil beim erfindungsgemäßen Empfänger ist die Möglichkeit, diesen in vollintegrierter Technik als anwenderspezifische integrierte Schaltung aufbauen zu können. Bei einem Übertragungssystem für digitale Nutzsignale mit einer Bitrate von etwa 140 Mbit/s und einem digitalen Zusatzsignal zur Übertragung von Telemetrieinformationen besteht dabei die Möglichkeit, den Empfänger in der sehr stromsparenden CMOS-Technik aufbauen zu können.

Eine bevorzugte Weiterbildung des erfindungsgemäßen Empfängers ist im Patentanspruch 2 beschrieben. Für den Fall, daß der Coderegelverletzungsprüfer des digitalen Übertragungssystems Ausgangssignale erzeugt, die nicht dem CMOS-Pegel entsprechen, ist erfindungsgemäß dem Empfängereingang ein Pulsformer vorgeschaltet, der ein Ausgangssignal mit einem CMOS-Pegel erzeugt.

Die Erfindung soll im folgenden anhand eines in der Zeichnung dargestellten Ausführungsbeispiels näher erläutert werden.

Dabei zeigt
- Fig. 1: einen erfindungsgemäßen Empfänger und
- Fig. 2: ein zugehöriges Impulsdiagramm.

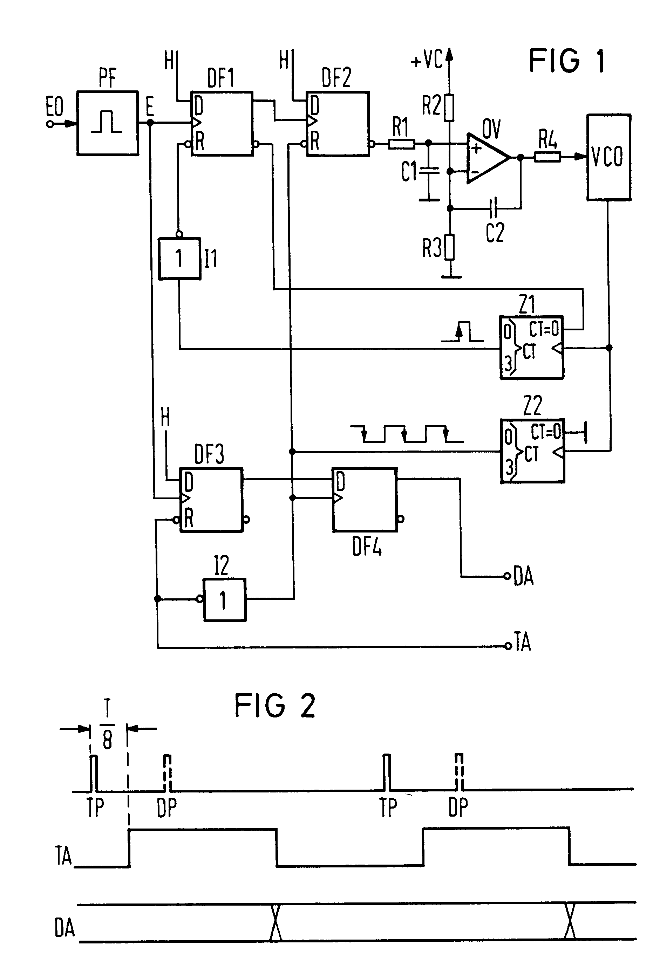

In der Fig. 1 ist dem Empfängereingang E ein Pulsformer PF mit einem Eingang EO vorgeschaltet, der die von einem empfangsseitigen Coderegelverletzungsprüfer erzeugten Fehlerimpulse in Impulse mit dem CMOS-Pegel umformt, da der gesamte nachgeschaltete Empfänger in CMOS-Technik als integrierte Schaltung ausgeführt ist. Mit dem Empfängereingang E ist der Takteingang eines ersten D-Flipflops DF1 verbunden, dessen nichtinvertierender Ausgang mit dem Takteingang eines zweiten D-Flipflops DF2 verbunden ist. Mit dem Empfängereingang E ist weiterhin der Takteingang eines dritten D-Flipflops DF3 verbunden, an dessen nichtinvertierenden Ausgang der Dateneingang D eines vierten D-Flipflops DF4 angeschlossen ist. Die Dateneingänge D des ersten bis dritten Flipflops DF1...DF3) sind mit einem Anschluß H für ein Potential entsprechend dem logischen Hochpegel verbunden. Der invertierende Ausgang des ersten D-Flipflops DF1 ist mit dem Freigabeeingang eines ersten Binärzählers Z1 verbunden, während der invertierende Ausgang des zweiten D-Flipflops DF2 über einen ersten Widerstand mit dem Pluseingang eines Operationsverstärkers OV und mit dem einem Anschluß eines ersten Kondensators C1 verbunden ist, dessen anderer Anschluß mit Bezugspotential verbunden ist. Der erste Widerstand R1 und der erste Kondensator C1 bilden zusammen einen Tiefpaß. Der Minuseingang des Operationsverstärkers OV ist über einen zweiten Widerstand R2 mit Speisespannung VC, über einen dritten Widerstand R3 mit Bezugspotential und über einen zweiten Kondensator C2 mit dem Ausgang des Operationsverstärkers OV verbunden, an diesen Ausgang ist über einen vierten Widerstand R4 der Steuereingang eines spannungsgesteuerten Oszillators VCO angeschlossen. Der dritte Widerstand R3 ist mit einem Widerstandwert entsprechend dem siebenfachen des zweiten Widerstandes R2 gewählt, so daß am Verbindungspunkt des aus beiden Widerständen gebildeten Spannungsteilers und damit am Minuseingang des Operationsverstärkers OV 7/8 der Speisespannung VC anstehen. Der Operationsverstärker OV bildet zusammen mit dem Spannungsteiler und dem zweiten Kondensator C2 ein Proportional-Integral-Stellglied mit der Referenzspannung von 7/8 der Speisespannung VC. Der spannungsgesteuerte Oszillator VCO schwingt auf der achtfachen Bittaktfrequenz des übertragenen Kombinationssignals und gibt ein entsprechendes Taktsignal an die Takteingänge des ersten und des zweiten Binärzählers Z1, Z2 ab. Der Freigabeeingang des zweiten Binärzählers Z2 liegt auf Bezugspotential. Beide Binärzähler sind vierstufig ausgeführt, so daß sich ein Zähler- bzw. Teilerverhältnis von 8 : 1 ergibt. Der Ausgang des ersten Binärzählers Z1 ist über einen ersten Inverter I1 mit dem Rücksetzeingang R des ersten D-Flipflops DF1 verbunden, entsprechend ist der Zählerausgang des zweiten Zählers Z2 mit dem Rücksetzeingang R des zweiten D-Flipflops DF2, außerdem aber mit dem Takteingang des vierten D-Flipflops DF4 sowie über einen zweiten Inverter I2 mit dem Rücksetzeingang R des dritten D-Flipflops DF3 sowie mit einem Taktausgang TA verbunden. Der nichtinvertierende Ausgang des vierten D-Flipflops DF4 ist mit einem Ausgang DA für vollbitbreite Datenimpulse verbunden.

Zur Erläuterung der Funktion des im Fig. 1 gezeigten Empfängers wird das Impulsdiagramm nach Fig. 2 herangezogen, in dessen oberer Zeile die am Empfängereingang E anstehenden Empfangsimpulse EP dargestellt sind. Bei den Empfangsimpulsen EP kann es sich um Taktimpulse TP oder um Datenimpulse DP handeln. Die Taktimpulse TP treten immer am Anfang der Bitperiode des übertragenen Kombinationssignals auf, in Abstand von etwa 1/4 Bitperiode nach den Taktimpulsen können Datenimpuls DP auftreten. Beim Ausführungsbeispiel markieren die Datenimpulse DP das Vorliegen eines Einsbits des Zusatzsignals, so daß diese Datenimpulse im Empfangssignal nur sporadisch auftreten. Die Dauer der Takt- und Datenimpulse TP, DP ist dabei vergleichsweise kurz gegenüber den Abstand von 1/4 Bitperiode.

Das erste D-Flipflop DF1 bildet zusammen mit dem spannungsgesteuerten Oszillator VCO und dem ersten Binärzähler Z1 ein Zeitglied mit einem Verhalten ähnlich einem monostabilden Multivibrator. Diese Anordnung soll ausschließlich durch empfangene Taktimpulse getriggert werden und den logischen Pegel danach so lange halten, daß empfangene Datenimpulse DP überdeckt und damit unwirksam gemacht werden. Für eine Erläuterung dieses Vorganges sei zunächst der nicht eingerastete Zustand der Phasenregelschleife, also ein plesiochroner Zustand des spannungsgesteuerten Oszillators VCO angenommen. Die ansteigende Flanke eines empfangenen Taktimpulses triggert dann zunächst das erste D-Flipflop DF1, dessen invertierender Ausgang den ersten Zähler Z1 freigibt bis die Zählerstellung 4 entsprechend einer halben Bittaktperiode erreicht ist. Anschließend wird das erste D-Flipflop DF1 zurückgesetzt und über dessen invertierenden Ausgang der Folge auch der erste Binärzähler Z1. Die Breite des am Ausgang des ersten D-Flipflops DF1 entstehenden Impulses kann dabei zwischen drei und vier Perioden des spannungsgesteuerten Oszillators VCO je nach Phasenlage zwischen Spannung am spannungsgesteuerten Oszillator und Empfangstaktpuls liegen. Der Ausgangsimpuls des ersten D-Flipflops liegt dann etwa zwischen dem 0,375- und dem 0,5-fachen der Bittaktperiode, so daß ein den Taktimpuls folgendes Datenzeichen mit Sicherheit überdeckt wird. Andererseits ist ein fälschliches Aufsynchronisieren der Anordnung auf einen empfangenen Datenimpuls ausgeschlossen, da beim erstmaligen möglichen Triggern durch einen Datenimpuls der Ausgang des ersten D-Flipflops DF1 bis zum Eintreffen des nächsten Impulses, bei dem es sich um einen Taktimpuls handeln muß, wieder in Ruhelage ist. Durch diesen Taktimpuls wird dann das erste D-Flipflop DF1 neu getriggert und damit unmittelbar die gewünschte richtige Synchronisation auf die Taktimpulse sichergestellt. Als Ergebnis der Synchronisation sind die Vorderflanken der vom ersten D-Flipflop DF1 erzeugten Ausgangsimpulse fest verknüpft mit den Vorderflanken der empfangenen Taktimpulse, so daß die Vorderflanken der Ausgangsimpulse als Führungsgröße für die nachgeschaltete Phasenregelschleife zur Taktregenerierung dienen können. In der Phasenregelschleife wird der benötigte Phasendiskriminator durch das zweite D-Flipflop DF2 gebildet, dessen invertierender Ausgang das aus dem ersten Widerstand R1, dem ersten Kondensator C1 und dem Operationsverstärker OV gebildete aktive Schleifenfilter speist. Das zweite D-Flipflop schaltet wegen seiner Ausführung in CMOS-Technik zwischen Bezugspotential und der Speisespannung VC, die Referenzspannung des Operationsverstärkers OV ist dabei wegen der Wahl der Widerstandswerte für den zweiten und den dritten Widerstand R3 gleich 7 × R2 bei einem Spannungswert von 7/8 der Speisespannung VC.

Beim Phasenvergleich wird das zweite D-Flipflop DF2 von der positiven Flanke des nichtinvertierten Ausgangsimpulses des ersten D-Flipflops DF1 getriggert und bei der nächsten fallenden Flanke der Ausgangsspannung des zweiten Zählers Z2 zurückgesetzt und während der gesamten negativen Takthalbwelle in diesem Zustand gehalten. Die Ausgangsspannung am invertierenden Ausgang des zweiten D-Flipflops DF2 und damit der Gleichspannungsmittelwert am Eingang des aktiven Schleifenfilter ist direkt proportional dem zeitlichen Abstand von Referenzflanke und nächstfolgender Taktflanke. Dabei erzeugt ein Nacheilen der Phase des spannungsgesteuerten Oszillators eine von der Speisespannung VC nach negativen Werten gerichtete Regelspannung, so daß der spannungsgesteuerte Oszillator VCO so eingerichtet ist, daß bei sinkender Steuerspannung eine Frequenzerhöhung auftritt. Wegen der Integralwirkung des Schleifenfilters liegt die Ausgangsspannung des zweiten D-Flipflops DF2 exakt bei der Referenzspannung von 7/8 der Speisespannung, so daß im eingeschwungenen Zustand die Taktflanke bei 1/8 der Taktperiode nach der Referenzflanke kommen muß. Dies entspricht der Zeile TA im Phasendiagramm in der Fig. 2, in dieser Zeile ist das am Taktausgang TA anstehende zurückgewonnene Taktsignal dargestellt, es ist erkennbar, daß die Vorderflanke des Taktsignals 1/8 Bittaktperiode nach der Referenzflanke kommt. Die Ausbildung des Phasendiskriminators mittels eines D-Flipflop und dessen Rücksetzung und Abschaltung für eine halbe Bitperiode hat den zusätzlichen Vorteil, daß bei asynchronem Betrieb des spannungsgesteuerten Oszillators zur Referenzfrequenz der Ausgangsspannungsmittelwert ebenfalls bei 7/8 der Speisespannung VC liegt und damit ein Einrasten der Phasenregelschleife ohne eine zusätzliche Fangschaltung möglich ist.

Wie aus der Zeile TA der Fig. 2 erkennbar ist, gibt das erzeugte Taktsignal in der Mitte zwischen dem Taktimpuls TP und dem Datenimpuls DP den Takteingang des dritten D-Flipflops DF3 für eine halbe Bitdauer frei. Falls in dieser Zeit ein Datenimpuls auftritt, wird der nichtinvertierende Ausgang des dritten D-Flipflops DF3 auf den logischen Einspegel gesetzt. Bei der fallenden Flanke des zurückgewonnenen Taktes entsprechend einer steigenden Flanke vor dem zweiten Inverter 12 wird das Datensignal in das vierte D-Flipflop DF4 übernommen und dort vollbitbreit gespeichert. Gleichzeitig mit der Übernahme in das vierte D-Flipflop DF4 wird das dritte D-Flipflop DF3 zurückgesetzt und ist für eine halbe Bittaktperiode bis 1/8 Bitperiode D nach dem nächsten Taktimpuls gesperrt, so daß ein empfangener Taktimpuls TP keinen Datenimpuls DP vortäuschen kann. Am Ausgang des vierten D-Flipflops DF4 stehen die regenerierten Daten, also das übertragende Zusatzsignal, wie in Zeile DA gezeigt, vollbitbreit an. Das ebenfalls neu erzeugte zugehörige Taktsignal ist durch die Phasenregelschleife von möglichem Phasenjitter weitgehend befreit. Dies betrifft auch Phasenschwankungen die sendeseitig bei der Einblendung der Datenimpulse entstehen können.

## Patentansprüche

1. Empfänger für ein digitales Zusatzsignal mit vergleichsweise niedriger Bitfolgefrequenz, das zusammen mit einem digitalen Nutzsignal dadurch in einem Kanal eines digitalen Übertragungssystems übertragen wird, dadurch gekennzeichnet, daß das digitale Zusatzsignal und ein dazugehörendes Taktsignal zu einem Kombinationssignal zusammengefaßt werden, dessen Bitrate dem des zusätzlich zu übertragenden Signals entspricht, und dabei zu Beginn eines jeden Bits des Kombinationssignals ein gegenüber der Bitperiode vergleichsweise kurzer Taktimpuls erzeugt wird und in festen zeitlichen Abstand zu diesem jeweils dann ein ebenfalls kurzer Datenimpuls erzeugt wird, wenn im digitalen Zusatzsignal wahlweise entweder ein Einsbit oder ein Nullbit auftritt,
daß das Kombinationssignal bei der Umcodierung des binären Nutzsignals in einen Übertragungs- oder Streckencode miteingeblendet wird und empfangsseitig durch einen Coderegelverletzungsprüfer bei jeder festgestellten Coderegelverletzung wenigstens ein Fehlerimpuls erzeugt und an einen Empfängereingang (E) abgibt,
daß mit dem Empfängereingang (E) die Takteingänge eines ersten und eines dritten D-Flipflops (DF1, DF3) verbunden sind, daß mit dem nichtinvertierenden Ausgang des ersten D-Flipflops (DF1) der Takteingang eines zweiten D-Flipflops (DF2) verbunden ist,
daß die Dateneingänge (D) des ersten, des zweiten und des dritten D-Flipflops (DF1, DF2, DF3) mit einem Anschluß (H) für ein Potential entsprechend dem logischen Hochpegel verbunden sind, daß der invertierende Ausgang des zweiten D-Flipflops (DF2) über einen ersten Widerstand (R1) mit dem Pluseingang eines Operationsverstärkers (OV) und über einen ersten Kondensator (C1) mit Bezugspotential verbunden ist,
daß der Ausgang des Operationsverstärkers (OV) über einen zweiten Kondensator (C2) mit dem Minuseingang des Operationsverstärkers (OV) sowie mit dem Mittelabgriff eines aus einen zweiten und einem dritten Widerstand (R2, R3) gebildeten Spannungsteilers verbunden ist,
daß der Ausgang des Operationsverstärkers (OV) wahlweise direkt oder über einen vierten Widerstand (R4) mit dem Steuereingang eines spannungsgesteuerten Oszillators (VCO) verbunden ist,
daß der Ausgang dieses Oszillators mit den Takteingängen eines ersten und eines zweiten Binärzählers (Z1, Z2) verbunden ist, daß der Freigabeeingang des ersten Binärzählers (Z1) an den invertierenden Ausgang des ersten D-Flipflops (DF1) angeschlossen ist,
daß der Freigabeeingang des zweiten Binärzählers (Z2) mit Bezugspotential verbunden ist,
daß der Ausgang des ersten Binärzählers (Z1) über einen ersten Inverter (11) mit dem Rücksetzeingang (R) des ersten D-Flipflops (DF1) verbunden ist,
daß der Ausgang des zweiten Binärzählers (Z2) mit dem Rücksetzeingang (R) des zweiten D-Flipflops (DF2) sowie mit dem Takteingang eines vierten D-Flipflops (DF4) und über einen zweiten Inverter (12) mit dem Rücksetzeingang (R) des dritten D-Flipflops (DF3) sowie mit einem Taktausgang (TA) verbunden ist und daß der nichtinvertierende Ausgang des dritten D-Flipflops (DF3) mit dem Dateneingang (D) des vierten D-Flipflops (DF4) und dessen nichtinvertierender Ausgang mit einem Datenausgang (DA) für das vollbitbreite Zusatzsignal verbunden sind.

2. Empfänger nach Patentanspruch 1,
**dadurch gekennzeichnet**,
daß der Widerstandswert des dritten Widerstandes (R3) das Siebenfache des Widerstandswertes des zweiten Widerstandes (R2) beträgt und
daß der spannungsgesteuerte Oszillator auf einer Frequenz entsprechend der achtfachen Bittaktfrequenz des digitalen Zusatzsignals schwingt und der erste und der zweite Binärzähler (Z1, Z2) ein Zähl- bzw. Teilerverhältnis von 8 : 1 aufweisen.

3. Empfänger nach Patentanspruch 1,
**dadurch gekennzeichnet**,
daß dem Empfängereingang (E) ein Pulsformer (PF) vorgeschaltet ist, der ein Ausgangssignal mit einem CMOS-Pegel erzeugt.

4. Empfänger nach Patentanspruch 1,
**dadurch gekennzeichnet**,
daß der spannungsgesteuerte Oszillator (VCO) bei sinkender Steuerspannung eine Schwingung mit steigender Frequenz abgibt.

## Claims

1. Receiver for a digital additional signal with a comparatively low bit rate which is transmitted together with a digital wanted signal in one channel of a digital transmission system, characterized in that that the digital additional signal and an associated clock signal are combined to form a combined signal, the bit rate of which corresponds to that of the signal to be transmitted additionally, and a comparatively short clock pulse in comparison with the bit period is generated thereby at the beginning of each bit of the combined signal and, at fixed time intervals from this, in each case a likewise short data pulse is generated whenever optionally either a one-bit or a zero-bit occurs in the digital additional signal,
in that the combined signal is also inserted into a transmission or link code during the code conversion of the binary wanted signal, and at the receiving end at least one error pulse is generated by a code rule violation tester for each code rule violation detected, and is output to a receiver input (E),
in that the clock inputs of a first and of a third D-type flip-flop (DF1, DF3) are connected to the receiver input (E),
in that the clock input of a second D-type flip-flop (DF2) is connected to the non-inverting output of the first D-type flip-flop (DF1),
in that the data inputs (D) of the first, of the second and of the third D-type flip-flop (DF1, DF2, DF3) are connected to a terminal (H) for a potential corresponding to the logical high level,
in that the inverting output of the second D-type flip-flop (DF2) is connected via a first resistor (R1) to the plus input of an operational amplifier (OV) and via a first capacitor (C1) to reference potential,
in that the output of the operational amplifier (OV) is connected via a second capacitor (C2) to the minus input of the operational amplifier (OV) as well as to the centre tap of a voltage divider formed from a second and a third resistor (R2, R3),
in that the output of the operational amplifier (OV) is connected to the control input of a voltage-controlled oscillator (VCO) either directly or via a fourth resistor (R4),
in that the output of this oscillator is connected to the clock inputs of a first and of a second binary counter (Z1, Z2),
in that the enable input of the first binary counter (Z1) is connected to the inverting output of the first D-type flip-flop (DF1),
in that the enable input of the second binary counter (Z2) is connected to reference potential,
in that the output of the first binary counter (Z1) is connected via a first inverter (I1) to the reset input (R) of the first D-type flip-flop (DF1),
in that the output of the second binary counter (Z2) is connected to the reset input (R) of the second D-type flip-flop (DF2) as well as to the clock input of a fourth D-type flip-flop (DF4) and via a second inverter (I2) to the reset input (R) of the third D-type flip-flop (DF3) as well as to a clock output (TA),
and in that the non-inverting output of the third D-type flip-flop (DF3) is connected to the data input (D) of the fourth D-type flip-flop (DF4) and the non-inverting output of which is connected to a data output (DA) for the full-bit wide additional signal.

2. Receiver according to Patent Claim 1, characterized in that the resistance of the third resistor (R3) is seven times the resistance of the second resistor (R2), and in that the voltage-controlled oscillator oscillates at a frequency corresponding to eight times the bit clock frequency of the digital additional signal and the first and the second binary counters (Z1, Z2) have a counting or dividing ratio of 8 : 1.

3. Receiver according to Patent Claim 1, characterized in that a pulse shaper (PF) which generates an output signal with a CMOS level is connected upstream of the receiver input (E).

4. Receiver according to Patent Claim 1, characterized in that the voltage-controlled oscillator (VCO) outputs an oscillation with rising frequency when the control voltage falls.

## Revendications

1. Récepteur pour un signal numérique supplémentaire, qui a un débit binaire relativement petit et qui est transmis, conjointement avec un signal utile numérique dans un canal d'un système de transmission numérique, caractérisé par le fait que le signal numérique supplémentaire et un signal de cadence, qui lui est associé, sont réunis pour former un signal combiné, dont le débit binaire correspond à celui du signal devant être transmis en supplément, qu'une impulsion de cadence, qui est relativement brève par rapport à la période des bits, est produite au début de chaque bit du signal combiné et qu'une impulsion de données également brève est produite, à un intervalle de temps fixe par rapport à l'impulsion de cadence, lorsqu'au choix un bit un ou un bit zéro apparaît dans le signal numérique supplémentaire,
que lors du transcodage du signal binaire utile en un code de transmission ou de section, le signal combiné est introduit en même temps et qu'au moins une impulsion d'erreur est produite, côté réception, par un dispositif de contrôle de la violation de la règle de code, lors de chaque violation établie de la règle de code et est envoyée à une entrée (E) du récepteur,
qu'à l'entrée (E) du récepteur sont reliées les entrées de cadence de première et troisième bascules bistables de type D (DF1, DF3),
que l'entrée de cadence d'une seconde bascule bistable de type D (DF2) est reliée à la sortie non inverseuse de la première bascule bistable de type D (DF1),
que les entrées de données (D) des première, seconde et troisième bascules bistables de type D (DF1,DF2,DF3), sont reliées à une borne (H) pour un potentiel correspondant au niveau logique haut,
que la sortie inverseuse de la seconde bascule bistable de type D (DF2) est reliée à l'entrée plus d'un amplificateur opérationnel (OV) par l'intermédiaire d'une première résistance (R1), et au potentiel de référence par l'intermédiaire d'un premier condensateur (C1),
que la sortie de l'amplificateur opérationnel (OV) est reliée par l'intermédiaire d'un second condensateur (C2) à l'entrée moins de l'amplificateur opérationnel (OV) ainsi qu'à la prise médiane d'un diviseur de tension formé par des seconde et troisième résistances (R2,R3),
que la sortie de l'amplificateur opérationnel (OV) est reliée au choix directement ou par l'intermédiaire d'une quatrième résistance (R4) à l'entrée de commande d'un oscillateur (VCO) commandé par tension,
que la sortie de cet oscillateur est reliée aux entrées de cadence de premier et second compteurs binaires (Z1,Z2),
que l'entrée de libération du premier compteur binaire (Z1) est raccordée à la sortie inverseuse de la première bascule bistable de type D (DF1),
que l'entrée de libération du second compteur binaire (Z2) est reliée au potentiel de référence,
que la sortie du premier compteur binaire (Z1) est reliée par l'intermédiaire d'un premier inverseur (I1) à l'entrée de remise à l'état initial (R) de la première bascule bistable de type D (DF1),
que la sortie du second compteur binaire (Z2) est reliée à l'entrée de remise à l'état initial (R) de la seconde bascule bistable de type D (DF2) ainsi qu'à l'entrée de cadence d'une quatrième bascule bistable de type D (DF4) et, par l'intermédiaire d'un second inverseur (I2), à l'entrée de remise à l'état initial (R) de la troisième bascule bistable de type D (DF3) ainsi qu'à une sortie de cadence (TA), et
que la sortie non inverseuse de la troisième bascule bistable de type D (FD3) est reliée à l'entrée de données (D) de la quatrième bascule bistable de type D (DF4) et dont la sortie non inverseuse de cette quatrième bascule est reliée à une sortie de données (DA) pour le signal supplémentaire ayant la largeur d'un bit complet.

2. Récepteur suivant la revendication 1, caractérisé par le fait
que la valeur résistive de la troisième résistance (R3) est égale à sept fois la valeur résistive de la seconde résistance (R2), et
que l'oscillateur commandé par tension oscille à une fréquence qui correspond à huit fois la fréquence du débit binaire du signal numérique supplémentaire, et que les premier et second compteurs binaires (Z1,Z2) ont un rapport de comptage ou de division égal à 8:1.

3. Récepteur suivant la revendication 1, caractérisé par le fait qu'en amont de l'entrée (E) du récepteur est branché un dispositif de mise en forme d'impulsions (PF), qui produit un signal de sortie ayant un niveau CMOS.

4. Récepteur suivant la revendication 1, caractérisé par le fait que l'oscillateur (VCO) commandé par tension délivre une oscillation dont la fréquence augmente, lorsque la tension de commande diminue.
